# EUROPÄISCHE PATENTSCHRIFT

(11) **EP 2 043 773 B1**
(45) Veröffentlichungstag und Bekanntmachung des Hinweises auf die Patenterteilung: **16.12.2009**
(21) Anmeldenummer: 07787082.2
(22) Anmeldetag: 05.07.2007
(51) Int. Cl.: B01J 13/22

(54) **POLYELEKTROLYT-MODIFIZIERTE MIKROKAPSELN**
POLYELECTROLYTE-MODIFIED MICROCAPSULES
MICROCAPSULES MODIFIÉES PAR POLYÉLECTROLYTES

(30) Priorität: 13.07.2006 EP 06117092; 17.10.2006 EP 06122418
(43) Veröffentlichungstag der Anmeldung: 08.04.2009
(73) Patentinhaber: BASF SE, 67056 Ludwigshafen (DE)
(72) Erfinder: HENTZE, Hans-Peter, 68161 Mannheim (DE); NIEDERBERGER, Dieter, 67065 Ludwigshafen (DE); WILLAX, Hans, 67133 Maxdorf (DE); BURGER, Joachim, 67056 Ludwigshafen (DE); PASCUAL GIENAP, Daniel, E-30012 Murcia (ES)
(86) Internationale Anmeldenummer: PCT/EP2007/056786
(87) Internationale Veröffentlichungsnummer: WO 2008/006762

(56) Entgegenhaltungen:
- WO-A-01/30146
- WO-A-95/34609
- JP-A- 55 105 615
- JP-A- 56 086 790
- JP-A- 59 046 126
- RO-A2- 92 076
- US-A1- 2006 039 976

## Beschreibung

Die vorliegende Erfindung betrifft Mikrokapseln umfassend einen Kapselkern und eine Kapselwand aus duroplastischem Polymer sowie auf der äußeren Oberfläche der Kapselwand angeordnete Polyelektrolyte mit einem mittleren Molekulargewicht von 500 g/mol bis 10 000 000 (10 Millionen) g/mol. Außerdem betrifft die vorliegende Erfindung ein Verfahren zu ihrer Herstellung sowie ihre Verwendung in Bindebaustoffen, Textilien, Wärmeträgerflüssigkeiten und Schüttungen.

Mikrokapseln sind in den verschiedensten Ausführungsformen bekannt und werden je nach Dichtigkeit der Kapselwand zu sehr unterschiedlichen Zwecken verwendet. Beispielsweise dienen sie dem Schutz von Kernmaterialien, die erst durch gezielte mechanische Zerstörung der Kapselwand freigesetzt werden sollen, beispielsweise von Farbstoffen für Durchschreibepapiere oder von verkapselten Duftstoffen. In solchen Anwendungsbereichen kennt man Kapselwandmaterialien auf Gelatine-, PolyurethanHarz-, Melamin-Formaldehyd-Harz- sowie Polyacrylatbasis. Andere Anforderungen werden an Wandmaterialien für Pflanzen schützende oder pharmazeutische Wirkstoffe als Kernmaterialien gestellt, bei denen es auf eine Durchlässigkeit der Kapselwand ankommt, die die kontrollierte Freisetzung und den zielgerichteten Transport der Wirkstoffe ermöglicht. Hier kennt man neben den durch chemische Verfahren hergestellten Kapseln auch mechanisch-physikalische Herstellverfahren.

Die EP-A 1 064 087 lehrt die Herstellung von Mikrokapseln mit durchlässigen Wänden, indem eine organische Mikrokugel mit abwechselnden Schichten von kationischen und anionischen Polyelektrolyten umhüllt wird und durch anschließendes Herauslösen der Mikrokugel ein Hohlraum entsteht.

Eine gänzlich andere Anwendung von Mikrokapseln ist die Verkapselung von Latentwärmespeichermaterialien, auch als PCM "Phase-Change-Materials" bezeichnet.

Ihre Funktionsweise beruht auf der beim fest/flüssig-Phasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden. Da die Latentwärmespeichermaterialien je nach Temperatur auch flüssig vorliegen, können sie nicht direkt mit Textilien oder Fasern verarbeitet werden, denn eine Trennung von der Faser bzw. dem Gewebe wäre zu befürchten.

Die Herstellung von Mikrokapseln mit Wänden auf Polymethylmethacrylatbasis ist beispielsweise in der WO 2005/116559 beschrieben. Die Herstellung der Mikrokapseln erfolgt dabei durch Polymerisation einer Öl-in-Wasser-Emulsion enthaltend Monomere, lipophile Substanz und ein Schutzkolloid. Derartige während der Polymerisation anwesende Schutzkolloide werden je nach Löslichkeit mit in die Kapselwand eingebaut (im Fall von Pickering Systemen) oder bleiben in der Wasserphase gelöst.

Die EP-A 1 321 182 lehrt mikroverkapselte Latentwärmespeichermaterialien mit einer Kapselwand aus einem hochvernetzten Methacrylsäureesterpolymer und nennt auch deren Verwendung in Textilien.

Für Anwendungen zur Ausrüstung im Textilsektor ist ein wichtiges Kriterium die chemische Reinigungsbeständigkeit. Hiermit ist die Beständigkeit gegenüber chlorierten oder perchlorierten Lösungsmitteln gemeint. So ist bei herkömmlichen Mikrokapseln oftmals eine Gewichtsabnahme zu beobachten, die auf unzureichend dichte oder defekte Kapseln deutet. Derartige Auswaschverluste können dabei im Bereich von 5-15 Gew.-% liegen.

Die ältere Anmeldung PCT/EP 2006/060439 schlägt zur Lösung dieses Problems vor, ein Mikrokapselpulver aus auf hochvernetzter Methacrylsäureester basierende Mikrokapseln einer Primärteilchengröße von 0,5 bis 30 µm und einer mittleren Teilchengröße der Pulverteilchen von 150 - 400 µm zu verwenden. Je nach Anwendung ist jedoch ein feineres Mikrokapselpulver erwünscht.

Daher war es ein Aspekt der vorliegenden Erfindung Mikrokapseln mit Latentwärmespeichermaterialien als Kapselkern zu finden, die eine höhere chemische Reinigungsbeständigkeit aufweisen. Ein weiterer Aspekt der vorliegenden Erfindung sind Mikrokapseln, die eine höhere Dichtigkeit gegen Diffusion des Kernmaterials aufweisen.

Dem gemäß wurden Mikrokapseln gefunden umfassend einen Kapselkern und eine Kapselwand aus duroplastischem Polymer sowie auf der äußeren Oberfläche der Kapselwand angeordnete Polyelektrolyte mit einem mittleren Molekulargewicht von 500 g/mol bis 10 Millionen g/mol.

Die erfindungsgemäßen Mikrokapseln umfassen einen Kapselkern und eine Kapselwand aus duroplastischem Polymer. Der Kapselkern besteht überwiegend, zu mehr als 95 Gew.-%, aus lipophiler Substanz. Der Kapselkern ist dabei abhängig von der Temperatur fest oder flüssig. Abhängig vom Herstellungsverfahren und dem dabei gewählten Schutzkolloid kann dieses ebenfalls Bestandteil der Mikrokapseln sein. So können bis zu 3 Gew.-% bezogen auf das Gesamtgewicht der Mikrokapseln Schutzkolloid sein. Gemäß dieser Ausführungsform weisen die Mikrokapseln auf der Oberfläche des duroplastischen Polymers das Schutzkolloid, auf und das Schutzkolloid bildet die äußere Oberfläche der Kapselwand. Es wird angenommen, dass sich erfindungsgemäß die Polyelektrolyte hierauf anordnen.

Die mittlere Teilchengröße der Kapseln (Z-Mittel mittels Lichtstreuung) beträgt 0,5 bis 100 µm, bevorzugt 1 bis 80 µm, insbesondere 1 bis 50 µm. Das Gewichtsverhältnis von Kapselkern zu duroplastischem Polymer beträgt im allgemeinen von 50 : 50 bis 95 : 5. Bevorzugt wird ein Kern/Wand-Verhältnis von 70 : 30 bis 93 : 7.

Erfindungsgemäß sind auf der äußeren Oberfläche der Kapselwand Polyelektrolyte angeordnet. Je nach Menge an Polyelektrolyt handelt es sich um eine punktuelle Anordnung des Polyelektrolyten, um Polyelektrolytbereiche auf der Oberfläche bis hin zu einer gleichmäßigen Anordnung des Polyelektrolyten, die einer Schicht oder Hülle ähnelt.

In der Regel beträgt der Anteil des Polyelektrolyten 0,1 bis 10 Gew.-% bezogen auf das Gesamtgewicht der polyelektrolyttragenden Mikrokapseln. Bevorzugt beträgt der Anteil Polyelektrolyt 0,5 - 5 Gew.%, insbesondere 1 - 3 Gew.-% bezogen auf das Gesamtgewicht der polyelektrolyttragenden Mikrokapseln.

Je nach Anwendungsgebiet können unterschiedliche Wanddicken erforderlich sein, so dass es ferner sinnvoll sein kann, die Polyelektrolytmenge an der Gesamtmenge der Monomere der Wand zu orientieren.

So beträgt die nach einer Ausführungsform bevorzugte Polyelektrolytmenge 10 bis 30 Gew.-% bezogen auf die Gesamtmenge der Monomere des Wandmaterials.

Nach einer anderen Ausführungsform beträgt die bevorzugte Polyelektrolytmenge 5 bis 15 Gew.-% bezogen auf die Gesamtmenge der Monomere des Wandmaterials.

Unter Polyelektrolyten werden allgemein Polymere mit ionisierbaren oder ionisch dissoziierbaren Gruppen, die Bestandteil oder Substituent der Polymerkette sein können verstanden. Üblicherweise ist die Zahl dieser ionisierbaren oder ionisch dissoziierbaren Gruppen im Polyelektrolyten so groß, dass die Polymere in der ionischen Form (auch Polyionen genannt) wasserlöslich oder in Wasser quellbar sind. Bevorzugt werden Polyelektrolyte, die in Wasser bei 25 °C eine Löslichkeit von ≥ 4 g/l aufweisen, insbesondere Polyelektrolyte mit unbegrenzter Löslichkeit bzw. Quellbarkeit in Wasser. Bevorzugt werden Polyelektrolyte, die eine Elektrolytfunktionalität an jeder Wiederholungseinheit tragen.

Im Gegensatz zu Schutzkolloiden haben Polyelektrolyte in der Regel keine oder nur eine gering emulgierende Wirkung und haben vorwiegend verdickende Wirkung. Im Rahmen der vorliegenden Erfindung haben Polyelektrolyte ein mittleres Molekulargewicht von 500 bis 10 000 000 g/mol, bevorzugt 1000 bis 100 000 g/mol, insbesondere 1 000 bis 10 000 g/mol. Es können lineare oder verzweigte Polyelektrolyte eingesetzt werden.

Anders als die im Rahmen der vorliegenden Erfindung eingesetzten Schutzkolloide, die vor der Polymerisation zur Herstellung der Öl-in-Wasser Emulsion zugegeben werden, sind Polyelektrolyte im Rahmen der vorliegenden Erfindung Polymere mit ionisierbaren oder ionisch dissoziierbaren Gruppen, die mit den Mikrokapseln - also nach erfolgter Polymerisation - in wässrigem Medium, vorzugsweise Wasser, in Kontakt gebracht werden. Unter wässrigem Medium sind dabei wässrige Mischungen zu verstehen, die bis zu 10 Gew.-% bezogen auf das wässrige Medium ein mit Wasser mischbares Lösungsmittel enthalten, welches in der gewünschten Einsatzmenge bei 25°C und 1 bar mit Wasser mischbar ist. Hierzu zählen Alkohole wie Methanol, Ethanol, Propanol, Isopropanol, Glykol, Glycerin und Methoxyethanol und wasserlösliche Ether wie Tetrahydrofuran und Dioxan sowie aprotische Zusätze wie Dimethylformamid oder Dimethylsulfoxid.

Je nach Art der dissoziierbaren Gruppen unterscheidet man kationische und anionische Polyelektrolyte (auch als Polyion bezeichnet). Betrachtet wird dabei die Ladung des Polyions (ohne Gegenion). Kationische Polyelektrolyte entstehen aus basischen Gruppen enthaltende Polymere (Polybasen) durch Anlagerung von Protonen oder Quaternierung.

Anionische Polyelektrolyte entstehen aus saure Gruppen enthaltene Polymere (Polysäuren) durch Abspaltung von Protonen.

Die Zuordnung des Polyelektrolyten erfolgt dabei nach der resultierenden Gesamtladung des Polyions (d.h. ohne Gegenion). Weist der Polyelektrolyt überwiegend positiv geladene, dissoziiert Gruppen auf, so handelt es sich um einen kationischen Polyelektrolyten. Weist er dagegen überwiegend negativ geladene Gruppen auf, so handelt es sich um einen anionischen Polyelektrolyten.

Bevorzugt werden ein oder mehrere kationische oder ein oder mehrere anionische Polyelektrolyte eingesetzt. Besonders bevorzugt werden ein oder mehrere kationische Polyelektrolyte gewählt. Man nimmt an, dass bei aufeinanderfolgender Zugabe von mehreren unterschiedlich geladenen Polyelektrolyten der Aufbau mehrerer Schichten erfolgt, sofern die Polyelektrolytmenge jeweils für den Aufbau einer Schicht ausreicht. In der Regel führt eine Polyelektrolytmenge von wenigsten 1 Gew.-% Polyelektrolyt bezogen auf das Gesamtgewicht der polyelektrolyttragenden Mikrokapseln zu einer Beschichtung. Bevorzugt wird jedoch nur eine Polyelektrolytschicht aufgebracht. Bei dieser Schicht kann es sich um einen oder eine Mischung mehrerer gleichgeladener Polyelektrolyte handeln.

Anionische Polyelektrolyte sind beispielsweise erhältlich durch radikalische Polymerisation von ethylenisch ungesättigten anionischen Monomeren in wässrigem Medium.

Als ethylenisch ungesättigte anionische Monomere kommen beispielsweise monoethylenisch ungesättigte C₃- bis C₅-Carbonsäuren wie Acrylsäure, Methacrylsäure, Ethacrylsäure, Crotonsäure, Maleinsäure, Fumarsäure und Itaconsäure, Sulfonsäuren wie Vinylsulfonsäure, Styrolsulfonsäure und Acrylamidomethylpropansulfonsäure und Phosphonsäuren wie Vinylphosphonsäure, und/oder jeweils die Alkalimetall-, Erdalkalimetall- und/oder Ammoniumsalze dieser Säuren in Betracht.

Zu den bevorzugt eingesetzten, anionischen Monomeren gehören Acrylsäure, Methacrylsäure, Maleinsäure und Acrylamido-2-methylpropansulfonsäure. Besonders bevorzugt sind wässrige Dispersionen von Polymerisaten auf Basis von Acrylsäure. Die anionischen Monomere können entweder allein zu Homopolymerisaten oder auch in Mischung untereinander zu Copolymerisaten polymerisiert werden. Beispiele hierfür sind die Homopolymerisate der Acrylsäure, Homopolymerisate der Methacrylsäure oder Copolymerisate aus Acrylsäure und Maleinsäure, Copolymerisate aus Acrylsäure und Methacrylsäure sowie Copolymerisate aus Methacrylsäure und Maleinsäure.

Die Polymerisation der anionischen Monomeren kann jedoch auch in Gegenwart mindestens eines anderen ethylenisch ungesättigten Monomeren durchgeführt werden. Diese Monomeren können nichtionisch sein oder aber eine kationische Ladung tragen.

Beispiele für nichtionische Comonomere sind Acrylamid, Methacrylamid, N-C₁- bis C₃-Alkylacrylamide, N-Vinylformamid, Acrylsäureester von einwertigen Alkoholen mit 1 bis 20 C-Atomen wie insbesondere Methylacrylat, Ethylacrylat, Isobutylacrylat und n-Butylacrylat, Methacrylsäureester von einwertigen Alkoholen mit 1 bis 20 C-Atomen z.B. Methylmethacrylat und Ethylmethyacrylat, sowie Vinylacetat und Vinylpropionat.

Geeignete kationische Monomere, die mit den anionischen Monomeren copolymerisierbar sind, sind Dialkylaminoethylacrylate, Dialkylaminoethylmethacrylate, Dialkylaminopropylacrylate, Dialkylaminopropylmethacrylate, Dialkylaminoethylacrylamide, Dialkylaminoethylmethacrylamide, Dialkylaminopropylacrylamide, Dialkylaminopropylmethacrylamide, Diallyldimethylammoniumchlorid, Vinylimidazol sowie die jeweils mit Mineralsäuren neutralisierten und/oder quaternierten kationischen Monomere. Einzelne Beispiele für kationische Monomere sind Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dimethyaminoethylacrylamid, Dimethylaminoethylmethacrylamid, Dimethylaminopropylacrylamid, Dimethylaminopropylmethacrylamid, Diethylaminoethylacrylamid und Diethylaminopropylacrylamid.

Die kationischen Monomere können vollständig oder auch nur teilweise neutralisiert bzw. quaterniert sein, z.B. jeweils zu 1 bis 99 %. Bevorzugt eingesetztes Quaternierungsmittel für die kationischen Monomere ist Dimethylsulfat. Man kann die Quaternierung der Monomere jedoch auch mit Diethylsulfat oder mit Alkylierungsmitteln, insbesondere Alkylhalogeniden wie Methylchlorid, Ethylchlorid oder Benzylchlorid durchführen. Die Comonomere werden bei der Herstellung der anionischen Polyelektrolyte beispielsweise in solchen Mengen eingesetzt, dass die entstehenden Polymerdispersionen beim Verdünnen mit Wasser und bei pH-Werten oberhalb von 7,0 und einer Temperatur von 20°C wasserlöslich sind und eine anionische Ladung aufweisen. Bezogen auf die bei der Polymerisation insgesamt eingesetzten Monomere beträgt die Menge an nichtionischen und/oder kationischen Comonomeren z.B. 0 bis 99, vorzugsweise 5 bis 75 Gew.-% und liegt meistens in dem Bereich von 5 bis 25 Gew.-%. Die kationischen Monomere werden dabei höchstens in einer Menge eingesetzt, dass die entstehenden Polyelektrolyte insgesamt bei pH-Werten < 6,0 und einer Temperatur von 20°C eine anionische Ladung tragen. Die anionische Überschussladung in den entstehenden amphoteren Polymeren beträgt z.B. mindestens 5 Mol-%, vorzugsweise mindestens 10 Mol-%, insbesondere mindestens 30 Mol-%, ganz besonders bevorzugt mindestens 50 Mol-%.

Beispiele für bevorzugte Copolymere sind Copolymerisate aus 25 bis 90 Gew.-% Acrylsäure und 75 bis 10 Gew.-% Acrylamid. Vorzugsweise polymerisiert man mindestens eine ethylenisch ungesättigte C₃ bis C₅-Carbonsäure in Abwesenheit von anderen monoethylenisch ungesättigten Monomeren. Besonders bevorzugt sind Homopolymerisate von Acrylsäure, die durch radikalische Polymerisation von Acrylsäure in Abwesenheit von anderen Monomeren erhältlich sind.

Als Vernetzer zur Herstellung verzweigter Polyelektrolyte können alle Verbindungen verwendet werden, die über mindestens zwei ethylenisch ungesättigte Doppelbindungen im Molekül verfügen. Solche Verbindungen werden beispielsweise bei der Herstellung vernetzter Polyacrylsäuren wie superabsorbierenden Polymeren eingesetzt, vgl. EP-A 0 858 478, Seite 4, Zeile 30 bis Seite 5, Zeile 43. Beispiele für Vernetzer sind Triallylamin, Pentaerythrittriallether, Pentaerythrittetraallylether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z.B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der erfindungsgemäßen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomere. Bevorzugt verwendete Vernetzer sind Pentaerythrittriallylether, Pentaerythrittetraallylether, N,N'-Divinylethylenharnstoff, mindestens zwei Allylgruppen enthaltende Allylether von Zuckern.wie Saccharose, Glucose oder Mannose und Triallylamin sowie Mischungen dieser Verbindungen.

Als anionische Polyelektrolyte können weiterhin Polykondensate wie beispielsweise Phenolsulfonsäureharze eingesetzt werden. Geeignet sind Aldehyd-Kondensate, besonders auf Basis von Formaldehyd, Acetaldehyd, Isobutyraldehyd, Propionaldehyd, Glutaraldehyd und Glyoxal, ganz besonders Formaldehyd-Kondensate auf Basis von Phenolsulfonsäuren. Als weitere reagierende Verbindungen können beispielsweise Amine oder Amide, insbesondere solche der Kohlensäure wie beispielsweise Harnstoff, Melamin oder Dicyandiamid zur Herstellung der Phenolsulfonsäureharze mitverwendet werden.

Die Phenolsulfonsäureharze liegen vorzugsweise als Salze vor. Bevorzugt weisen die erfindungsgemäßen Kondensationsprodukte einen Kondensationsgrad von 1 bis 20 und ein mittleres Molekulargewicht von 500 - 10 000 g/mol auf. Die Herstellung der Phenolsulfonsäureharze erfolgt vorzugsweise analog der in der EP-A 816 406 angegebenen Weise.

Als kationische Polyelektrolyte kommen beispielsweise Polymere aus der Gruppe der
(a) Vinylimidazoliumeinheiten enthaltende Polymere,
(b) Polydiallyldimethylammoniumhalogenide,
(c) Vinylamineinheiten enthaltende Polymere,
(d) Ethylenimineinheiten enthaltende Polymere,
(e) Dialkylaminoalkylacrylat- und/oder Dialkylaminoalkylmethacrylateinheiten enthaltende Polymere und
(f) Dialkylaminoalkylacrylamid- und/oder Dialkylaminoalkylmethacrylamideinheiten enthaltende Polymere

in Betracht. Solche Polymere sind bekannt und im Handel erhältlich. Die den kationischen Polyelektrolyten der Gruppen a-f zugrunde liegenden Monomere können dabei in Form der freien Base, vorzugsweise jedoch in Form ihrer Salze mit Mineralsäuren wie Salzsäure, Schwefelsäure oder Phosphorsäure sowie in quaternierter Form zur Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht.

Beispiele für kationische Polyelektrolyte sind
(a) Homopolymerisate von Vinylimidazoliummethosulfat und/oder Copolymerisate aus Vinylimidazoliummethosulfat und N-Vinylpyrrolidon,
(b) Polydiallyldimethylammoniumchloride,
(c) Polyvinylamine sowie teilhydrolysierte Polyvinylformamide,
(d) Polyethylenimine
(e) Polydimethylaminoethylacrylat, Polydimethylaminoethylmethacrylat, Copolymerisate aus Acrylamid und Dimethylaminoethylacrylat und Copolymerisate aus Acrylamid und Dimethylaminoethylmethacrylat, wobei die basischen Monomeren auch in Form der Salze mit Mineralsäuren oder in quaternierter Form vorliegen können, und
(f) Polydimethylaminoethylacrylamid, Polydimethylaminoethylmethacrylamid und Copolymerisate aus Acrylamid und Dimethylaminoethylacrylamid, wobei die kationischen Monomere auch in Form der Salze mit Mineralsäuren oder in quaternierter Form vorliegen können.

Die mittleren Molmassen M_{w} der kationischen Polyelektrolyte betragen mindestens 500 g/mol. Sie liegen beispielsweise in dem Bereich von 500 g/mol bis 10 Millionen g/mol, vorzugsweise in dem Bereich von 1 000 bis 500 000 g/mol und meistens bei 1 000 bis 5 000 g/mol.

Vorzugsweise verwendet man als kationische Polymere
(a) Homopolymerisate von Vinylimidazoliummethosulfat und/oder Copolymerisaten aus Vinylimidazoliummethosulfat und N-Vinylpyrrolidon mit einer mittleren Molmasse M_{w} von jeweils 500 bis 10 000 g/mol,
(b) Polydiallyldimethylammoniumchloride mit einer mittleren Molmasse M_{w} von 1000 bis 10 000 g/mol,
(c) Polyvinylamine und teilhydrolysierte Polyvinylformamide mit einer mittleren Molmasse M_{w} von 500 bis 10 000 g/mol und
(d) Polyethylenimine mit einer mittleren Molmasse M_{w} von 500 bis 10 000 g/mol.

Die unter (a) aufgeführten Copolymerisate aus Vinylimidazoliummethosulfat und N-Vinylpyrrolidon enthalten beispielsweise 10 bis 90 Gew.-% N-Vinylpyrrolidon einpolymerisiert. Anstelle von N-Vinylpyrrolidon kann man als Comonomer mindestens eine Verbindung aus der Gruppe der ethylenisch ungesättigten C₃- bis C₅-Carbonsäuren wie insbesondere Acrylsäure oder Methacrylsäure oder die Ester dieser Carbonsäuren mit 1 bis 18 C-Atome enthaltenden einwertigen Alkoholen wie Methylacrylat, Ethylacrylat, Isopropylacrylat, n-Butylacrylat, Isobutylacrylat, Methylmethacrylat, Ethylmethacrylat oder n-Butylmethacrylat einsetzen.

Als Polymere der Gruppe (b) kommt vorzugsweise Polydiallyldimethylammoniumchlorid in Betracht. Außerdem eignen sich Copolymerisate aus Diallyldimethylammoniumchlorid und Dimethylaminoethylacrylat, Copolymerisate aus Diallyldimethylammoniumchlorid und Dimethylaminoethylmethacrylat, Copolymerisate aus Diallyldimethylammoniumchlorid und Diethylaminoethylacrylat, Copolymerisate aus Diallyldimethylammoniumchlorid und Dimethylaminopropylacrylat; Copolymerisate aus Diallyldimethylammoniumchlorid und Dimethylaminoethylacrylamid und Copolymerisate aus Diallyldimethylammoniumchlorid und Dimethylaminopropylacrylamid. Die Copoylmerisate von Diallyldimethylammoniumchlorid enthalten beispielsweise 1 bis 50, meistens 2 bis 30 Mol-% mindestens eines der genannten Comonomeren einpolymerisiert.

Vinylamineinheiten enthaltende Polymere (c) sind erhältlich durch Polymerisieren von N-Vinylformamid gegebenenfalls in Gegenwart von Comonomeren und Hydrolyse der Polyvinylformamide unter Abspaltung von Formylgruppen unter Bildung von Aminogruppen. Der Hydrolysegrad der Polymeren kann beispielsweise 1 bis 100 % betragen und liegt bevorzugt in dem Bereich von 60 bis 100 %. Unter teilhydrolysierten Polyvinylformamiden ist im Rahmen dieser Anmeldung ein Hydrolysegrad von ≥ 50% bevorzugt von ≥ 90% zu verstehen. Die Herstellung von Homo- und Copolymerisaten von N-Vinylformamid sowie die Hydrolyse dieser Polymerisate unter Bildung von Vinylamineinheiten enthaltenden Polymeren wird beispielsweise in der US 6,132,558, Spalte 2, Zeile 36 bis Spalte 5, Zeile 25 ausführlich beschrieben. . Vinylamineinheiten enthaltende Polymere werden beispielsweise als Catiofast® und Polymin® Marken von BASF Aktiengesellschaft vertrieben.

Ethylenimineinheiten enthaltende Polymere der Gruppe (d) wie Polyethylenimine sind ebenfalls Handelsprodukte. Sie werden beispielsweise unter der Bezeichnung Polymin® von BASF Aktiengesellschaft verkauft z.B. Polymin® SK. Bei diesen kationischen Polymeren handelt es sich um Polymere von Ethylenimin, die durch Polymerisieren von Ethylenimin in wässrigem Medium in Gegenwart geringer Mengen an Säuren oder säurebildenden Verbindungen wie halogenierten Kohlenwasserstoffen z.B. Chloroform, Tetrachlorkohlenstoff, Tetrachlorethan oder Ethylchlorid hergestellt werden oder um Kondensationsprodukte aus Epichlorhydrin und Aminogruppen enthaltenden Verbindungen wie Mono- und Polyaminen z.B. Dimethylamin, Diethylamin, Ethylendiamin, Diethylentriamin und Triethylentetramin oder Ammoniak. Sie haben beispielsweise Molmassen M_{w} von 500 bis 1 Million, vorzugsweise 1000 bis 500 000 g/mol.

Zu dieser Gruppe von kationischen Polymeren gehören auch Pfropfpolymerisate von Ethylenimin auf Verbindungen, die eine primäre oder sekundäre Aminogruppe aufweisen, z.B. Polyamidoamine aus Dicarbonsäuren und Polyaminen. Die mit Ethylenimin gepfropften Polyamidoamine können gegebenenfalls noch mit bifunktionellen Vernetzern umgesetzt werden, beispielsweise mit Epichlorhydrin oder Bis-chlorhydrinethern von Polyalkylenglykolen.

Als kationische Polymere der Gruppe (e) kommen Dialkylaminoalkylacrylat- und/oder Dialkylaminoalkylmethacrylateinheiten enthaltende Polymere in Betracht. Diese Monomeren können in Form der freien Basen, vorzugsweise jedoch in Form der Salze mit Mineralsäuren wie Salzsäure, Schwefelsäure oder Phosphorsäure sowie in quaternierter Form bei der Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht. Aus diesen Monomeren können sowohl Homopolymerisate als auch Copolymerisate hergestellt werden. Als Comonomere eignen sich beispielsweise Acrylamid, Methacrylamid, N-Vinylformamid, N-Vinylpyrrolidon, Methylacrylat, Ethylacrylat, Methylmethacrylat und Mischungen der genannten Monomeren.

Kationische Polymere der Gruppe (f) sind Dimethylaminoethylacrylamid- oder Dimethylaminoethylmethacrylamid-Einheiten enthaltende Polymerisate, die die kationischen Monomere vorzugsweise in Form der Salze mit Mineralsäuren oder in quaternierter Form enthalten. Hierbei kann es sich um Homopolymerisate und um Copolymerisate handeln. Beispiele sind Homopolymere von Dimethylaminoehtylacrylamid, das mit Dimethylsulfat oder mit Benzylchlorid vollständig quaterniert ist, Homopolymere von Dimethylaminoethylmethacrylamid, das mit Dimethylsulfat, Methylchlorid, Ethylchlorid oder Benzylchlorid vollständig quaterniert ist sowie Copolymerisate aus Acrylamid und mit Dimethylsulfat quaterniertes Dimethylaminoethylacrylamid.

Außer solchen Polykationen, die allein aus kationischen Monomeren aufgebaut sind, können auch amphotere Polymere als kationische Polymere unter der Voraussetzung eingesetzt werden, dass sie insgesamt eine kationische Ladung tragen. Die kationische Überschussladung in den amphoteren Polymerisaten beträgt beispielsweise mindestens 5 Mol-%, vorzugsweise mindestens 10 Mol-% und liegt meistens in dem Bereich von 15 bis 95 Mol-%. Beispiele für amphotere Polymere mit einer kationischen Überschussladung sind
- Copolymerisate aus Acrylamid, Dimethylaminoethylacrylat und Acrylsäure, die mindestens 5 Mol-% mehr Dimethylaminoethylacrylat als Acrylsäure einpolymerisiert enthalten,
- Copolymerisate aus Vinylimidazoliummethosulfat, N-Vinylpyrrolidon und Acrylsäure, die mindestens 5 Mol-% mehr Vinylimidazoliummethosulfat als Acrylsäure einpolymerisiert enthalten,
- hydrolysierte Copolymerisate aus N-Vinylformamid und einer ethylenisch ungesättigten C₃- bis C₅-Carbonsäure, vorzugsweise Acrylsäure oder Methacrylsäure, mit einem um mindestens 5 Mol-% höheren Gehalt an Vinylamineinheiten als Einheiten an ethylenisch ungesättigten Carbonsäuren
- Copolymerisate aus Vinylimidazol, Acrylamid und Acrylsäure, wobei der pH-Wert so gewählt ist, dass mindestens 5 Mol% mehr Vinylimidazol kationisch geladen ist als Acrylsäure einpolymerisiert ist.

Erfindungsgemäß geeignete Polyelektrolyte können ferner Biopolymere, wie Alginsäure, Gummi arabicum, Nucleinsäuren, Pektine, Proteine, sowie chemisch modifizierte-Biopolymere, wie ionische oder ionisierbare Polysaccharide, z. B. Carboxymethylcellulose, Chitosan, Chitosansulfat, und Ligninsulfonat sein.

Bevorzugt wird der Polyelektrolyt ausgewählt aus der Gruppe umfassend Polyacrylsäuren, Phenolsulfonsäurepräkondensate, Polydiallyldimethylammoniumchloride, Polyvinylamine, teilhydrolysierte Polyvinylformamide und Polyethylenimin.

Nach einer Ausführungsform werden anionische Polyelektrolyte bevorzugt, insbesondere der Polyacrylsäuren und Phenolsulfonsäureharze.

Nach einer Ausführungsform werden kationische Polyelektrolyte bevorzugt, insbesondere der Gruppen (b), (c) und (d), also Polydiallyldimethylammoniumchloride, Polyvinylamine und teilhydrolysierte Polyvinylformamide und Polyethylenimine. Besonders bevorzugt werden als kationische Polyelektrolyte Polydiallyldimethylammoniumchloride eingesetzt.

Es wird angenommen, dass sich die Polyelektrolyte an der elektrostatisch geladenen Mikrokapselwand aufgrund elektrostatischer Wechselwirkungen anlagern. Dabei konnte jedoch beobachtet werden, dass nicht nur kationische Polyelektrolyte zu dichteren Mikrokapselwänden führen sondern auch der Zusatz von anionischen Polyelektrolyten die Dichtigkeit der Kapselwände erhöht. Es wird angenommen, dass diese über Wasserstoffbrückenbindungen oder über Gegenionen mit der Mikrokapselwand wechselwirken.

Die erfindungsgemäßen Mikrokapseln werden durch Behandeln von Mikrokapseln mit einem oder mehreren Polyelektrolyten erhalten. Hierzu werden die Mikrokapseln mit einem oder mehreren Polyelektrolyten in einem wässrigen Medium vorzugsweise Wasser miteinander in Kontakt gebracht. Nach einer Ausführungsform wird ein Mikrokapselpulver in einem wässrigen Medium oder Wasser dispergiert und mit Polyelektrolyt in Kontakt gebracht. Nach einer anderen Ausführungsform wird Mikrokapselpulver in einer wässrigen Polyelektrolytlösung dispergiert. Bevorzugt werden die Mikrokapseln durch radikalische Polymerisation einer Öl-in-Wasser-Emulsion enthaltend die Monomere, die lipophile Substanz und ein Schutzkolloid und anschließender Behandlung mit einem oder mehreren Polyelektrolyten sowie gegebenenfalls anschließender Sprühtrocknung erhalten. Durch den ersten Verfahrensschritt der radikalischen Polymerisation entsteht eine Ausgangsmikrokapseldispersion, die im zweiten Schritt mit dem Polyelektrolyt behandelt wird.

Der Polyelektrolyte wird dabei der Ausgangsmikrokapseldispersion in Substanz oder in Lösung vorzugsweise als wässrige Lösung zudosiert. Die Polyelektrolytmenge beträgt dabei 0,1 bis 5 Gew.-%, bevorzugt 0,25 bis 1,5 Gew.-% bezogen auf die Ausgangsmikrokapseldispersion.

Die Kapselwand ist aus einem duroplastischen Polymer. Unter duroplastisch sind dabei Wandmaterialien zu verstehen, die aufgrund des Vernetzungsgrades nicht erweichen, sondern sich bei hohen Temperaturen zersetzen. Geeignete duroplastische Wandmaterialien sind beispielsweise vernetzte Formaldehydharze, vernetzte Polyharnstoffe, vernetzte Polyurethane sowie vernetzte Methacryl- und Acrylsäureesterpolymere.

Unter Formaldehydharzen versteht man Reaktionsprodukte aus Formaldehyd mit
- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,
oder ihren Mischungen.

Als Kapselwandmaterial bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkyl- insbesondere Methylether dieser Formaldehydharze sowie die Mischungen mit diesen Formaldehydharzen. Insbesondere werden Melamin-Formaldehyd-Harze und/oder deren Methylether bevorzugt.

In den von den Durchschreibepapieren her bekannten Verfahren werden die Harze als Prepolymere eingesetzt. Das Prepolymer ist noch in der wässrigen Phase löslich und wandert im Verlauf der Polykondensation an die Grenzfläche und umschließt die Öltröpfchen. Verfahren zur Mikroverkapselung mit Formaldehydharzen sind allgemein bekannt und beispielsweise in der EP-A-562 344 und EP-A-974 394 beschrieben.

Kapselwände aus Polyharnstoffen und Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole.

Solche Grenzflächenpolyadditionsverfahren sind beispielsweise aus der US 4,021,595, EP-A 0 392 876 und EP-A 0 535 384 bekannt.

Bevorzugt werden Mikrokapseln, deren Kapselwand ein Polymer auf Basis von Acrylsäureestern und/oder Methacrylsäureestern ist.

Solche Kapselwände sind aus 10 bis 100 Gew.-%, vorzugsweise 30 bis 99 Gew.-% eines oder mehrerer C₁-C₂₄-Alkylester der Acryl- und/oder Methacrylsäure als Monomere I aufgebaut. Außerdem können die Polymere bis zu 80 Gew.-%, vorzugsweise 1 bis 70 Gew.-%, besonders bevorzugt 5 bis 60 Gew.-%, insbesondere 10 bis 50 Gew.-%, eines bi- oder polyfunktionellen Monomers als Monomere II, welches in Wasser nicht löslich oder schwer löslich ist, einpolymerisiert enthalten. Daneben können die Polymere bis zu 90 Gew.-%, vorzugsweise 0,5 bis 50 Gew.-%, insbesondere 1 bis 30 Gew.-% sonstige Monomere III einpolymerisiert enthalten.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens 2 nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere III wie Vinylacetat, Vinylpropionat, Vinylpyridin und Styrol in Betracht. Besonders bevorzugt werden Ladung tragende oder ionisierbare Gruppen tragende Monomere IIIa, die von den Monomeren I und II verschieden sind, wie Acrylsäure, Methacrylsäure, Itaconsäure, Maleinsäure, Maleinsäureanhydrid, 2-Hydroxyethylacrylat und -methacrylat, Acrylamido-2-methylpropansulfonsäure, Acrylnitril, Methacrylamid, N-Vinylpyrrolidon, N-Methylolacrylamid, N-Methylolmethacrylamid, Dimethylaminoethylmethacrylat und Diethylaminoethylmethacrylat.

Besonders bevorzugt wird eine Ausführungsform, bei der die Kapselwand der Mikrokapseln aufgebaut ist aus
30 bis 99 Gew.-% eines oder mehrerer C₁-C₂₄-Alkylester der Acryl- und/oder Methacrylsäure als Monomere I
1- 70 Gew.-%, bevorzugt 5 bis 60 Gew.-%, insbesondere 10 bis 50 Gew.-%, eines bi- oder polyfunktionellen Monomers als Monomere II, welches in Wasser nicht löslich oder schwer löslich ist,
0,5 bis 50 Gew.-%, bevorzugt 1 bis 30 Gew.-% sonstige Monomere IIIa jeweils bezogen auf das Gesamtgewicht der Monomere.

Nach einer weiteren bevorzugten Ausführungsform sind die Wand-bildenden Polymere aus 30 bis 90 Gew.-% Methacrylsäure, 10 bis 70 Gew.-% eines Alkylesters der (Meth)acrylsäure, bevorzugt Methylmethacrylat, tert-Butylmethacrylat, Phenylmethacrylat und Cyclohexylmethacrylat, und 0 bis 40 Gew.-% weitere ethylenisch ungesättigter Monomeren gebildet. Diese weiteren ethylenisch ungesättigten Monomere können die für diese Ausführungsform bisher nicht erwähnten Monomere I, II und/oder III sein. Da sie in der Regel keinen wesentlichen Einfluss auf die gebildeten Mikrokapseln dieser Ausführungsform haben, ist ihr Anteil bevorzugt < 20 Gew.-% insbesondere <10 Gew.-%. Derartige Mikrokapseldispersionen sowie ihre Herstellung werden in der EP-A-1 251 954 beschrieben, auf die ausdrücklich Bezug genommen wird.

Die bevorzugten Mikrokapseldispersionen sowie ihre Herstellung sind aus der EP-A 457 154, DE-A 101 39 171, DE-A 102 30 581 und EP-A 1 321 182 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Anschließend löst man die Polymerisation der Monomeren durch Erwärmung aus und steuert sie durch weitere Temperaturerhöhung, wobei die entstehenden Polymere die Kapselwand bilden, welche die lipophile Substanz umschließt.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion (flüssig in flüssig) oder Suspension (fest in flüssig) zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

In der Regel führt man die Polymerisation bei 20 bis 100°C, vorzugsweise bei 40 bis 95°C durch. Abhängig von der gewünschten lipophilen Substanz ist die Öl-in-Wasser-Emulsion bei einer Temperatur zu bilden, bei der das Kernmaterial flüssig/ölig ist. Entsprechend muß ein Radikalstarter gewählt werden, dessen Zerfallstemperatur oberhalb dieser Temperatur und die Polymerisation ebenfalls 2 bis 50°C oberhalb dieser Temperatur durchgeführt werden, so dass man gegebenenfalls Radikalstarter wählt, deren Zerfallstemperatur oberhalb des Schmelzpunkts der lipophilen Substanz liegt.

Eine gängige Verfahrensvariante für lipophile Substanzen mit einem Schmelzpunkt bis etwa 60°C ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z.B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Bevorzugt werden Mikrokapseln.durch schrittweise Erwärmung der Öl-in-Wasser-Emulsion gebildet. Dabei ist unter schrittweise zu verstehen, dass durch Temperaturerhöhung die Reaktion durch Zerfall des Radikalstarters ausgelöst wird und durch weitere Erwärmung, die kontinuierlich oder periodisch erfolgen kann, die Polymerisation gesteuert wird. Die Geschwindigkeit der Polymerisation kann dabei durch Wahl der Temperatur und der Menge an Radikalstarter gesteuert werden. Dies geschieht bevorzugt mit Hilfe eines Programms mit ansteigender Temperatur. Die gesamte Polymerisationszeit kann zu diesem Zweck in zwei oder mehr Perioden unterteilt werden. Die erste Polymerisationsperiode ist durch einen langsamen Zerfall des Polymerisationsinitiators gekennzeichnet. In der zweiten Polymerisationsperiode und gegebenenfalls weiteren Polymerisationsperioden wird die Temperatur der Reaktionsmischung erhöht, um den Zerfall der Polymerisationsinitiatoren zu beschleunigen. Die Temperatur kann in einem Schritt oder in mehreren Schritten oder kontinuierlich in linearer oder nichtlinearer Weise erhöht werden. Die Temperaturdifferenz zwischen dem Beginn und dem Ende der Polymerisation kann bis zu 50°C betragen. Im Allgemeinen beträgt diese Differenz 3 bis 40°C, vorzugsweise 3 bis 30°C.

Nach Erreichen der Endtemperatur setzt man die Polymerisation zweckmäßigerweise noch etwa für eine Zeit von bis zu 2 Stunden fort, um Restmonomergehalte abzusenken. Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 9924525 beschrieben, vorteilhaft durch redoxinitiierte Polymerisation, wie in der DE-A-4 435 423, DE-A-4419518 und DE-A-4435422 beschrieben.

Man kann auf diese Weise eine Mikrokapseldispersion mit Mikrokapseln mit einer mittleren Teilchengröße im Bereich von 0,5 bis 30 µm herstellen, wobei die Teilchengröße in an sich bekannter Weise über die Scherkraft, die Rührgeschwindigkeit, das Schutzkolloid und seine Konzentration eingestellt werden kann.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten und damit die Ausbildung von Mikrokapseln mit mittleren Teilchengrößen im Bereich von 0,5 bis 30 µm, vorzugsweise 2 bis 12 µm, in der Dispersion ermöglichen.

In der Regel werden die Mikrokapseln in Gegenwart wenigstens eines organischen Schutzkolloids hergestellt, das sowohl anionisch als auch neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden oder nichtionische Schutzkolloide.

Nach einer weiteren Ausführungsform werden organisch neutrale Schutzkolloide bevorzugt.

Organische neutrale Schutzkolloide sind Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate sowie Methylhydroxypropylcellulose.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen und nichtionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Die Wirkweise und ihr Einsatz ist in der EP-A-1 029 018 sowie der EP-A-1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann ist eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose.

Bevorzugt wird bei der Herstellung der Mikrokapseldispersion mit organisch neutralen Schutzkolloiden gearbeitet, da in diesem Fall der Zusatz von Sprühhilfsmittel zur Sprühtrocknung nicht notwendig ist. Die organisch neutralen Schutzkolloide wirken zusätzlich als Sprühhilfsmittel, so dass ihr Einsatz besonders vorteilhaft ist.

Die erfindungsgemäßen Mikrokapseln sind je nach lipophiler Substanz für Durchschreibepapier, in der Kosmetik, zur Verkapselung von Parfümstoffen, Aromastoffen oder Klebstoff oder im Pflanzenschutz geeignet. Besonders eignen sich die erfindungsgemäßen Mikrokapseln für Latentwärmespeichermaterialien.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weist die lipophile Substanz einen fest/flüssig Phasenübergang im Temperaturbereich von -20 bis 120°C auf.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den kapselkern-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicher gewünscht sind, werden die Latentwärmespeichermaterialien gewählt. Beispielsweise verwendet man für Wärmespeicher in Baustoffen in gemäßigtem Klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Bei Solaranwendungen als Speichermedium oder zur Überhitzungsvermeidung von transparenter Wärmedämmung, wie in der EP-A-333 145 beschrieben, sind vor allem Umwandlungstemperaturen von 30-60°C geeignet.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Die Anwendung des erfindungsgemäßen Mikrokapselpulvers ist vielfältig. So lässt es sich vorteilhaft zur Modifizierung von Fasern und Textilerzeugnissen beispielsweise von Textilgeweben und Nonwovens (z.B. Vliesstoffe) usw. einsetzen. Als Applikationsformen sind hierbei insbesondere Mikrokapselbeschichtungen, Schäume mit Mikrokapseln und mikrokapselmodifizierte Textilfasern zu nennen. Für Beschichtungen werden die Mikrokapseln zusammen mit einem polymeren Bindemittel und gegebenenfalls anderen Hilfsstoffen, in der Regel als Dispersion, auf ein Textilerzeugnis aufgebracht. Übliche Textilbindemittel sind filmbildende Polymere mit einer Glasübergangstemperatur im Bereich von -45 bis 45°C vorzugsweise -30 bis 12°C. Die Herstellung solcher Mikrokapselbeschichtungen wird beispielsweise in der WO-95/34609 beschrieben auf die ausdrücklich Bezug genommen wird. Die Modifizierung von Schäumen mit Mikrokapseln erfolgt in ähnlicher Weise, wie in der DE 981576T und der US 5955188 beschrieben. Das vorgeschäumte Substrat, vorzugsweise ein Polyurethan oder Polyether, wird mit einer Bindemittel-haltigen Mikrokapseldispersion oberflächenbehandelt. Anschließend gelangt die Bindemittel-Mikrokapsel-Mischung durch Anlegen von Vakuum in die offenporige Schaumstruktur, in der das Bindemittel aushärtet und die Mikrokapseln an das Substrat bindet. Eine weitere Verarbeitungsmöglichkeit ist die Modifizierung der Textilfasern selbst, z.B. durch Verspinnen aus einer Schmelze oder einer wässrigen Dispersion wie in der US 2002/0054964 beschrieben. Schmelzspinnverfahren werden dabei für Nylon-, Polyester-, Polypropylenfasern und ähnliche Fasern eingesetzt während das Nassspinnverfahren vor allem zur Herstellung von Acrylfasern dient.

Das erfindungsgemäße Mikrokapselpulver weist eine gute chemische Reinigungsbeständigkeit auf.

Ein weiteres bereits Anwendungsfeld sind Bindebaustoffen mit mineralischen, silikatischen oder polymeren Bindemitteln. Man unterscheidet dabei zwischen Formkörpern und Beschichtungsmassen. So zeichnen sie sich durch ihre Hydrolysestabilität gegenüber den wässrigen und oft alkalisch wässrigen Materialien aus.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glas- oder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 4 340 510, der GB-PS 15 05 558, der US-A 3 196 122, der US-A 3 043 790, der US-A 3 239 479, der DE-A 43 17 035, der DE-A 43 17 036, der JP-A 91/131 533 und anderen Schriften bekannt sind.

Die erfindungsgemäßen Mikrokapselh eignen sich zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A 19 623 413 verwiesen. In typischer Weise enthalten die Trockenzusammensetzungen mineralischer Bindebaustoffe, bezogen auf die Menge an mineralischem Bindemittel, 0,1 bis 20 Gew.-% Mikrokapseln.

Bevorzugt werden die erfindungsgemäßen Mikrokapseln als Zusatz in mineralischen Beschichtungsmassen wie Putz angewendet. Ein solcher Putz für den Innenbereich setzt sich üblicherweise aus Gips als Bindemittel zusammen. In der Regel beträgt das Gewichtsverhältnis Gips/Mikrokapsel von 95:5 bis 70:30. Höhere Mikrokapselanteile sind natürlich möglich.

Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten. Der Anteil der Mikrokapseln am Gesamtfeststoff entspricht den Gewichtsverhältnissen für Gipsputze.

Ferner eignen sich die erfindungsgemäßen Mikrokapseln als Zusatz in polymeren Formkörpern oder polymeren Beschichtungsmassen. Hierunter sind thermoplastische und duroplastische Kunststoffe zu verstehen, bei deren Verarbeitung die Mikrokapseln nicht zerstört werden. Beispiele sind Epoxy-, Harnstoff-, Melamin-, Polyurethan und Silikonharze und auch Lacke sowohl auf Lösungsmittelbasis, High-Solid-Basis, Pulverlack oder Wasserbasislack und Dispersionsfilme. Geeignet ist das Mikrokapselpulver auch zur Einarbeitung in Kunststoffschäume und Fasern. Beispiele für Schäume sind Polyurethanschaum, Polystyrolschaum, Latexschaum und Melaminharzschaum.

Ferner eignen sich die erfindungsgemäßen Mikrokapseln als Zusatz in lignocellulosehaltigen Formkörpern, wie Spanplatten.

Vorteilhafte Effekte können ferner erzielt werden, wenn die erfindungsgemäßen Mikrokapseln in mineralischen Formkörpern verarbeitet werden, die geschäumt werden.

Ferner eignet sich die erfindungsgemäßen Mikrokapseln zur Modifizierung von Gipskartonplatten. Dabei werden bevorzugt 5 bis 40 Gew.-%, insbesondere 20 bis 35 Gew.-%, Mikrokapselpulver bezogen auf das Gesamtgewicht der Gipskartonplatte (Trockensubstanz) eingearbeitet. Die Herstellung von Gipskartonplatten mit mikroverkapselten Latentwärmespeichern ist allgemein bekannt und in der WO-A-1421243 beschrieben auf die ausdrücklich Bezug genommen wird. Dabei können anstelle von Karton aus Cellulosebasis auch alternative, faserartige Gebilde als beidseitige Abdeckungen für die "Gipskartonplatte" verwendet werden. Alternative Materialien sind Polymerfasern aus z.B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden. Derartige Bauplatten sind beispielsweise aus der US 4,810,569, US 4,195,110 und US 4,394,411 bekannt.

Ferner eignen sich die erfindungsgemäßen Mikrokapseln zur Herstellung von Wärmeträgerflüssigkeit. Unter dem Begriff Wärmeträgerflüssigkeit sind im Rahmen dieser Anmeldung sowohl Flüssigkeiten für den Wärmetransport als auch Flüssigkeiten für den Kältetransport, also Kühlflüssigkeiten, gemeint. Das Prinzip der Übertragung von Wärmeenergie ist in beiden Fällen gleich und unterscheidet sich lediglich in der Übertragungsrichtung.

Darüber hinaus eignen sich die erfindungsgemäßen Mikrokapseln für Schüttungen.

Die nachfolgenden Beispiele sollen die Erfindung näher erläutern. Bei den Prozentangaben in den Beispielen handelt es sich um Gewichtsprozent.

Die Teilchengröße des Mikrokapselpulvers wurde mit einem Malvern Particle Sizer Typ 3600E gemäß einer Standardmessmethode bestimmt, die in der Literatur dokumentiert ist.

### Methode zur Bestimmung der chemischen Reinigungsbeständigkeit von Wachskapseln

Dazu wurden 5 g Mikrokapselpulver mit 45 g Tetrachlorethylen 2 Stunden bei Raumtemperatur mit einem Magnetrührer gerührt und anschließend über einen Faltenfilter das Pulver abgetrennt. Durch das Rühren mit Tetrachlorethylen wurde ausgetretenes Wachs gelöst, nicht aber die Kapselwand. Anschließend bestimmte man die Einwaage der Lösung in einem Blechschälchen und den Rückstand nach Verdampfen des Lösungsmittels. Der Menge Rückstand bezogen auf das eingewogene Mikrokapselpulver entspricht dem Auswaschverlust.

### Bestimmung der Abdampfrate

Zur Vorbehandlung wurden 2 g der Mikrokapseldispersion in einem Aluschälchen zwei Stunden lang bei 105°C getrocknet, um ewaiges Restwasser zu entfernen. Dann wurde das Gewicht (m₀) ermittelt. Nach einstündigem Erhitzen auf 180°C wird nach Abkühlen erneut das Gewicht (m₁) ermittelt. Die Gewichtsdifferenz (m₀- m₁) bezogen auf mo gibt die Abdampfrate an.

Herstellung der Mikrokapseldispersion

### Beispiel 1:

Wasserphase:

| | |
|---|---|
| 1304 kg | Wasser |
| 664 kg | Hydroxypropylcellulose (5 %ig in Wasser) |
| 166 kg | Polyvinylalkohol (Hydrolysegrad: 79 %) |
| 7,3 kg | Natriumnitrit |

Ölphase

| | |
|---|---|
| 1507 kg | Octadecan |
| 31,5 kg | Paraffinwachs (Schmelzpunkt: 68-70 °C) |
| 34 kg | Methacrylsäure (20 Gew.-% bezogen auf Gesamtmonomer) |
| 68,5 kg | Methylmethacrylat (40 Gew.%) |
| 68,5 kg | Butandiolacrylat (40% Gew.-%) |
| 2,45 kg | t-Butylperpivalat |

Zulauf 1:

| | |
|---|---|
| 18,79 kg | t-Butylhydroperoxid, 10%ig in Wasser |

Zulauf 2:

| | |
|---|---|
| 1,05 kg | Ascorbinsäure, 15 kg Natronlauge (25 %ig in Wasser), 100 kg Wasser |

Zulauf 3:

| | |
|---|---|
| 190 kg | Polyacrylsäure (M_{w}=1200g/mol, 45%ige Lösung in Wasser) |

Bei Raumtemperatur wurde die obige-Wasserphase vorgelegt und mit 10%iger Salpetersäure auf pH 4 gestellt. Nach Zugabe der Ölphase wurde mit einem schnelllaufenden Dissolverrührer bei 4200 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 40 Minuten auf 56°C aufgeheizt, innerhalb von weiteren 20 Minuten auf 70°C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt und der Polyelektrolyte (Zulauf 3) unter Rühren zudosiert. Die entstandene Mikrokapseldispersion besaß einen Feststoffgehalt von 44 % und eine mittlere Teilchengröße D(4,3) = 8,2 µm (gemessen mit Fraunhoferbeugung, Volumenmittelwert). Das Verhältnis Kapselwand zu Kernmaterial (Paraffin) beträgt 10:90. Das Beispiel 1 entspricht Versuch V5 (ohne Zulauf 3) bzw. 6 (s. Tabelle).

### Beispiel 2:

Wasserphase:

| | |
|---|---|
| 330 kg | Wasser |
| 180 kg | Polyvinylalkohol (Hydrolysegrad: 80 %) |
| 1,8 kg | Natriumnitrit (2,5 %ig in Wasser) |

Ölphase

| | |
|---|---|
| 440 kg | n-Tetradecan |
| 9 kg | Paraffinwachs (Schmelzpunkt: 68-70 °C) |
| 15 kg | Methacrylsäure |
| 77 kg | Methylmethacrylat |
| 28 kg | Butandiolacrylat |
| 1,35 kg | t-Butylperpivalat |

Zulauf 1:

| | |
|---|---|
| 1,09 kg | t-Butylhydroperoxid, 70%ig in Wasser |

Zulauf 2:

| | |
|---|---|
| 0,34 kg | Ascorbinsäure, 56 kg Wasser |

Zulauf 3:

| | |
|---|---|
| 34,2kg | Polydiallyldimethylammoniumchlorid |
| | (M_{w} = 400 000 g/mol 30%ige wässrige Lösung) |

Bei Raumtemperatur wurde die obige Wasserphase vorgelegt. Nach Zugabe der Ölphase wurde mit einem schnellaufenden Dissolverrührer bei 4500 Upm bei 40 °C dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 60 Minuten von 40 °C auf 70 °C aufgeheizt, innerhalb von weiteren 60 Minuten von 70 °C auf 85 °C, aufgeheizt. Die entstandene Mikrokapseldispersion wurde unter Rühren auf 70°C gekühlt und der Zulauf 1 dazugegeben. Der Zulauf 2 wurde unter Rühren bei 70°C über 100 Minuten dosiert zugegeben. Anschließend wurde abgekühlt und der Polyelektrolyt (Zulauf 3) hinzudosiert. Die entstandene Mikrokapseldispersion besaß einen Feststoffgehalt von 48,0 % und eine mittlere Teilchengröße 4,7 µm (gemessen mit Fraunhoferbeugung, Volumenmittelwert).

### Beispiel 3:

Wasserphase:

| | |
|---|---|
| 1304 kg | Wasser |
| 670 kg | Hydroxyethylcellulose (5 %ig in Wasser) |
| 180 kg | Polyvinylalkohol (Hydrolysegrad: 79 %) |
| 7,9 kg | Natriumnitrit |

Ölphase

| | |
|---|---|
| 1504 kg | n-Octadecan |
| 68,5 kg | Methylmethacrylat |
| 54,8 kg | Butandiolacrylat |
| 13,7 kg | Dimethylaminoethylmethacrylat |
| 2,45 kg | t-Butylperpivalat |

Zulauf 1:

| | |
|---|---|
| 18,79 kg | t-Butylhydroperoxid, 10%ig in Wasser |

Zulauf 2:

| | |
|---|---|
| 1,05 kg | Ascorbinsäure, 15 kg Natronlauge (25 %ig in Wasser), 100 kg Wasser |

Zulauf 3:

| | |
|---|---|
| 98,4 kg | Phenolsulfonsäure-Formaldehyd-Harz |
| | (50%ige wässrige Lösung, M_{w} = 7000 g/mol) |

Bei Raumtemperatur wurde die obige Wasserphase vorgelegt. Nach Zugabe der Ölphase wurde mit einem schnelllaufenden Dissolverrührer bei 3800 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 40 Minuten auf 56°C aufgeheizt, innerhalb von weiteren 20 Minuten auf 70 °C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt und der Polyelektrolyt (Zulauf 3) hinzugegeben. Die entstandene Mikrokapseldispersion besaß einen Feststoffgehalt von 42 % und eine mittlere Teilchengröße 5,8 µm (gemessen mit Fraunhoferbeugung, Volumenmittelwert).

### Beispiel 4:

Wasserphase:

| | |
|---|---|
| 1606,7 kg | Wasser |
| 825,5 kg | Hydroxyethylcellulose (5 %ig in Wasser) |
| 221,8 kg | Polyvinylalkohol (Hydrolysegrad: 79 %) |
| 9,7 kg | Natriumnitrit |

Ölphase

| | |
|---|---|
| 1027,4 kg | n-Octadecan |
| 34,3 kg | Methylmethacrylat |
| 11,4 kg | Butandiolacrylat |
| 68,5 kg | Methacrylsäure |
| 2,45 kg | t-Butylperpivalat |

Zulauf 1:

| | |
|---|---|
| 18,79 kg | t-Butylhydroperoxid, 10%ig in Wasser |

Zulauf 2:

| | |
|---|---|
| 1,05 kg | Ascorbinsäure, 15 kg Natronlauge (25 %ig in Wasser), 100 kg Wasser |

Zulauf 3:

| | |
|---|---|
| 98,4 kg | Phenolsulfonsäure-Formaldehyd-Harz |
| | (50%ige wässrige Lösung, M_{w} = 7000 g/mol) |

Bei Raumtemperatur wurde die obige Wasserphase vorgelegt. Nach Zugabe der Ölphase wurde mit einem schnellaufenden Dissolverrührer bei 3800 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 40 Minuten auf 56°C aufgeheizt, innerhalb von weiteren 20 Minuten auf 70°C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt und der Polyelektrolyt (Zulauf 3) hinzugegeben. Die entstandene Mikrokapseldispersion besaß einen Feststoffgehalt von 30,1 % und eine mittlere Teilchengröße 9,8 µm (gemessen mit Fraunhoferbeugung, Volumenmittelwert).

### Beispiele 5 - 15

Analog Beispiel 1 wurde mit den der Tabelle zu entnehmenden Monomeren und Polyelektrolyten erfindungsgemäße Mikrokapseln hergestellt. Die Beispiele V5, V7, V9, V11 und V14 bezeichnen die Proben vor der Modifizierung mit Polyelektrolyten. Die Polyelektrolyt-modifizierten Mikrokapseln sind die Beispiele 6, 8, 10, 12, 13 und 15.
Die Abdampfrate sowie der Auswaschverlust sind der Tabelle zu entnehmen.
Die Ergebnisse belegen, dass die erfindungsgemäßen Mikrokapseln deutlich bessere Werte im Hinblick auf die Dichtigkeit und die Reinigungsbeständigkeit aufweisen.

| Bsp. | Gesamt-monomer [Gew.-%] | MMA [Gew.-%] | MAS [Gew.-%] | BDA-2 [Gew.-%] | DMAEMA [Gew.-%] | Feststoff-gehalt [Gew.-%] | Polyelektrolyt [Gew.-%] | Abdampfrate [%] | Auswaschverlust [%] |
|---|---|---|---|---|---|---|---|---|---|
| V5 | 10 | 40 | 20 | 40 | 0 | - | - | 7,3 | - |
| 6 | 10 | 40 | 20 | 40 | 0 | 44 | 5% Polyacrylsäure | 2,9 | - |
| V7 | 15 | 70 | 5 | 25 | 0 | - | - | 9,1 | 6,4 |
| 8 | 15 | 70 | 5 | 25 | 0 | 45 | 3% Phenolsulfonsäure-Formaldehyd-Harz | 4,1 | 4,1 |
| V9 | 10 | 50 | 0 | 40 | 10 | - | - | 5,6 | - |
| 10 | 10 | 50 | 0 | 40 | 10 | 45 | 3% PhenolsulfonsäureFormaldehyd-Harz | 3,3 | - |
| V11 | 15 | 65 | 10 | 25 | 0 | - | - | 6,9 | - |
| 12 | 15 | 65 | 10 | 25 | 0 | | 1% PhenolsulfonsäureFormaldehyd-Harz | 1,1 | - |
| 13 | 15 | 65 | 10 | 25 | 0 | 43 | 3% Polydiallyldimethylammoni-umchlorid | 1,7 | - |
| V14 | 10 | 30 | 60 | 10 | 0 | - | - | 3,4 | - |
| 15 | 10 | 30 | 60 | 10 | 0 | 30 | 1% PhenolsulfonsäureFormaldehyd-Harz | 3,1 | - |

| | | | | | | | | | |
|---|---|---|---|---|---|---|---|---|---|
| MMA: Methylmethacrylat; MAS: Methacrylsäure; BDA-2: 2-Butandiolacrylat; DMAEMA: Dimethylaminoethylmethacrylat; Monomermengen bezogen auf Gesamtmonomer Die Gesamtmonomermenge in Gew.-% ist bezogen auf die Mikrokapsel.' Die Gesamtmonomermenge ist ein Maß für die Wandstärke. | | | | | | | | | |

Wasserphase:

| | |
|---|---|
| 1304 kg | Wasser |
| 664 kg | einer 5 gew.-%igen wässrigen Hydroxypropylcelluloselösung |
| 166 kg | einer 10 gew.-%igen wässrigen Polyvinylalkohol-Lösung (Hydrolysegrad: 79 |
| | %) Mowiol® 15-79 |
| 7,3 kg | einer 2,5 gew.-%igen wässrigen Natriumnitrit-Lösung |

Ölphase

| | |
|---|---|
| 1507 kg | Octadecan |
| 31,5 kg | Paraffinwachs (Schmelzpunkt: 68-70 °C) |
| 34 kg | Methacrylsäure (20 Gew.-% bezogen auf Gesamtmonomer) |
| 68,5 kg | Methylmethacrylat (40 Gew.%) |
| 68,5 kg | Butandiolacrylat (40% Gew.-%). |
| 2,45 kg | einer 75% igen Lösung von t-Butylperpivalat in aliphat. Kohlenwasserstof- |
| | fen |

Zulauf 1:

| | |
|---|---|
| 18,79 kg | einer 10 gew.-%igen wässrigen Lösung von t-Butylhydroperoxid, |

Zulauf 2:

| | |
|---|---|
| 98,5 kg | einer 1%igen wässrigen Lösung von Ascorbinsäure |

Zulauf 3

| | |
|---|---|
| 15 kg | einer 25 gew.-%igen wässrigen Natronlauge |
| 105 kg | Wasser |

Zulauf 4:

| | |
|---|---|
| 17,53 kg | einer 30%igen Lösung von Viscalex® HV 30 in Wasser |

Zulauf 5:

| | |
|---|---|
| 190 kg | einer 45 gew.-%igen wässrigen Polyacrylsäurelösung (M_{w}=1200g/mol) |

Bei Raumtemperatur wurde die obige Wasserphase vorgelegt und mit 10%iger Salpetersäure auf pH 4 gestellt. Nach Zugabe der Ölphase wurde mit einem schnelllaufenden Dissolverrührer bei 4200 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 40 Minuten auf 56°C aufgeheizt, innerhalb von weiteren 20 Minuten auf 70 °C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt, Zuläufe 3 und 4 nacheinander zugegeben und der Polyelektrolyte (Zulauf 5) unter Rühren zudosiert. Die entstandene Mikrokapseldispersion besaß einen Feststoffgehalt von 44 % und eine mittlere Teilchengröße D(4,3) = 8,2 µm (gemessen mit Fraunhoferbeugung, Volumenmittelwert). Das Verhältnis Kapselwand zu Kernmaterial (Paraffin) beträgt 10:90. Das Beispiel B1 entspricht Versuch VB5 (ohne Zulauf 3) bzw. B6 (s. Tabelle).

### Beispiel B2:

Wasserphase:

| | |
|---|---|
| 387,8 kg | Wasser |
| 193,9 kg | einer 10 gew.-%igen wässrigen Polyvinylalkohol-Lösung (Hydrolysegrad: 80 |
| | %) |
| 2,14 kg | einer 2,5 gew.-%igen wässrigen Natriumnitritlösung |

Ölphase

| | |
|---|---|
| 440 kg | n-Tetradecan |
| 9,2 kg | Paraffinwachs (Schmelzpunkt: 68-70 °C) |
| 7,9 kg | Methacrylsäure |
| 51,5 kg | Methylmethacrylat |
| 19,8 kg | Butandiolacrylat |
| 0,8 kg | Ethylhexylthioglycolat |
| 0,71 kg | einer 75% igen Lösung von t-Butylperpivalat in aliphat. Kohlenwasserstoffen |

Zulauf 1:

| | |
|---|---|
| 5,5 kg | einer 10 gew.-%igen wässrigen t-Butylhydroperoxidlösung, |

Zulauf 2:

| | |
|---|---|
| 28,9 kg | einer 1 %igen wässrigen Ascorbinsäurelösung |

Zulauf 3:

| | |
|---|---|
| 34,2kg | einer 30 gew.-%igen wässrigen Polydiallyldimethylammoniumchloridlösung |
| | (M_{w} = 400 000 g/mol) |

Bei Raumtemperatur wurde die obige Wasserphase vorgelegt. Nach Zugabe der Ölphase wurde mit einem schnellaufenden Dissolverrührer bei 4500 Upm bei 40 °C dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 60 Minuten von 40 °C auf 70 °C aufgeheizt, innerhalb von weiteren 60 Minuten von 70 °C auf 85 °C, aufgeheizt. Die entstandene Mikrokapseldispersion wurde unter Rühren auf 70°C gekühlt und der Zulauf 1 dazugegeben. Der Zulauf 2 wurde unter Rühren bei 70°C über 100 Minuten dosiert zugegeben. Anschließend wurde abgekühlt und der Polyelektrolyt (Zulauf 3) hinzudosiert. Die entstandene Mikrokapseldispersion besaß einen Feststoffgehalt von 46,0 % und eine mittlere Teilchengröße 4,7 µm (gemessen mit Fraunhoferbeugung, Volumenmittelwert).

Beispiel B3:
Wasserphase:

| | |
|---|---|
| 1062 kg | Wasser |
| 531 kg | einer 5 gew.-%igen Lösung von Hydroxyethylcellulose |
| 132,8 kg | einer 10 gew.-%igen wässrigen Polyvinylalkohol-Lösung (Hydrolysegrad: 79 |
| | %) (Mowiol® 15-79) |
| 5,9 kg | einer 2,5 gew.-%igen wässrigen Natriumnitrit-Lösung |

Ölphase

| | |
|---|---|
| 1230 kg | n-Octadecan |
| 68,5 kg | Methylmethacrylat |
| 54,8 kg | Butandiolacrylat |
| 13,7 kg | Dimethylaminoethylmethacrylat |
| 1,96 kg | einer 75% igen Lösung von t-Butylperpivalat in aliphat. Kohlenwasserstof- |
| | fen |

Zulauf 1:

| | |
|---|---|
| 15,0 kg | einer 50 gew.-%igen wässrigenPhenolsulfonsäure-Formaldehyd- |

Zulauf 2:

| | |
|---|---|
| 79,1 kg | einer 1 gew.-%igen wässrigen Ascorbinsäure-Lösung |

Zulauf 3

| | |
|---|---|
| 4,2 kg einer | 25 gew.-%ige Natronlauge (in Wasser) |
| 4 kg | Wasser |

Zulauf 4

| | |
|---|---|
| 18,7 kg einer | 30%igen wässrigen Verdickerlösung (Viscalex® HV 30) |

Zulauf 5:

| | |
|---|---|
| 98,4 kg | einer 10 gew.-%igen wässrigen t-Butylhydroperoxidlösung, |

Bei Raumtemperatur wurde die obige Wasserphase vorgelegt. Nach Zugabe der Ölphase wurde mit einem schnelllaufenden Dissolverrührer bei 3500 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 60 Minuten auf 70 °C, innerhalb von weiteren 60 Minuten auf 85 °C aufgeheizt und für eine Stunde bei 85 °C gehalten. Zu der entstandenen Mikrokapseldispersion wurde unter Rühren Zulauf 1 dazugegeben. Der Zulauf 2 wurde unter Rühren bei über 90 Minuten dosiert zugegeben, während auf Raumtemperatur abgekühlt wurde. Zulauf 3 und 4 wurden nacheinander zugegeben. Anschließend wurde der Polyelektrolyt (Zulauf 5) hinzugegeben. Die entstandene Mikrokapseldispersion besaß einen Feststoffgehalt von 42 % und eine mittlere Teilchengröße 5,6 µm (gemessen mit Fraunhofer-beugung, Volumenmittelwert).

### Beispiel 84:

Wasserphase:

| | |
|---|---|
| 2100 kg | Wasser |
| 443,5 kg | 5 gew.-%ige wässrigen Hydroxyethylcelluloselösung |
| 110,9 kg | einer 10 gew.-%igen wässrigen Polyvinylalkohol-Lösung (Hydrolysegrad: 79 |
| | %) (Mowiol® 15-79) |
| 4,9 kg | einer 2,5 gew.-%igen wässrigen Natriumnitrit-Lösung |

Ölphase

| | |
|---|---|
| 1027,4 kg | n-Octadecan |
| 34,3 kg | Methylmethacrylat |
| 11,4 kg | Butandiolacrylat |
| 68,5 kg | Methacrylsäure |
| 1,6 kg | einer 75% igen Lösung von t-Butylperpivalat in aliphat. Kohlenwasserstoffen |

Zulauf 1:

| | |
|---|---|
| 12,6 kg | einer 10 gew.-%igen wässrigen t-Butylhydroperoxidlösung, |

Zulauf 2:

| | |
|---|---|
| 66,0 kg | einer 1 gew.-%igen wässrigen Ascorbinsäure-Lösung |

Zulauf 3

| | |
|---|---|
| 34,2 kg | einer 25%igen wässrigen NaOH-Lösung |
| 3,33 kg | Wasser |

Zulauf 4

| | |
|---|---|
| 15,6 kg | einer 30%igen wässrigen Verdickerlösung (Viscalex® HV 30)Zulauf 5: |
| 98,4 kg | einer 50 gew.-%igen wässrigen Lösung eines Phenolsulfonsäure-Formaldehyd-Harz (M_{w} = 7000 g/mol) |

Bei Raumtemperatur wurde die obige Wasserphase vorgelegt. Nach Zugabe der Ölphase wurde mit einem schnelllaufenden Dissolverrührer bei 3500 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 60 Minuten auf 70 °C, innerhalb von weiteren 60 Minuten auf 85 °C aufgeheizt und für eine Stunde bei 85 °C gehalten. Zu der entstandenen Mikrokapseldispersion wurde unter Rühren Zulauf 1 dazugegeben. Der Zulauf 2 wurde unter Rühren bei über 90 Minuten dosiert zugegeben, während auf Raumtemperatur abgekühlt wurde. Zulauf 3 und 4 wurden nacheinander zugegeben. Anschließend wurde der Polyelektrolyt (Zulauf 5) hinzugegeben. Die entstandene Mikrokapseldispersion besaß einen Feststoffgehalt, von 30,1% und eine mittlere Teilchengröße 9,8 µm (gemessen mit Fraunhoferbeugung, Volumenmittelwert).

### Beispiele B5 - B 15

Analog Beispiel B1 wurde mit den der Tabelle zu entnehmenden Monomeren und Polyelektrolyten erfindungsgemäße Mikrokapseln hergestellt. Die Beispiele VB5, VB7, VB9, VB11 und VB14 bezeichnen die Proben vor der Modifizierung mit Polyelektrolyten. Die Polyelektrolyt-modifizierten Mikrokapseln sind die Beispiele B6, B8, B10, B12, B13 und B15.
Die Abdampfrate sowie der Auswaschverlust sind der Tabelle zu entnehmen.
Die Ergebnisse belegen, dass die erfindungsgemäßen Mikrokapseln deutlich bessere Werte im Hinblick auf die Dichtigkeit und die Reinigungsbeständigkeit aufweisen.

| Bsp. | Gesamt-monomer [Gew.-%] | MMA [Gew.-%] | MAS [Gew.-%] | BDA-2 [Gew.-%] | DMAEMA [Gew.-%] | Feststoffgehalt [Gew.-%] | Polyelektrolyt [Gew.-%] | Abdampfrate [%] | Auswaschverlust [%] |
|---|---|---|---|---|---|---|---|---|---|
| VB5 | 10 | 40 | 20 | 40 | 0 | - | - | 7,3 | - |
| B6 | 10 | 40 | 20 | 40 | 0 | 44 | 5% Polyacrylsäure | 2,9 | - |
| VB7 | 15 | 70 | 5 | 25 | 0 | - | - | 9,1 | 6,4 |
| B8 | 15 | 70 | 5 | 25 | 0 | 45 | 3% Phenolsulfonsäure-Formaldehyd-Harz | 4,1 | 4,1 |
| VB9 | 10 | 50 | 0 | 40 | 10 | - | - | 5,6 | - |
| B10 | 10 | 50 | 0 | 40 | 10 | 45 | 3% Phenolsulfonsäure-Formaldehyd-Harz | 3,3 | - |
| VB11 | 15 | 65 | 10 | 25 | 0 | - | - | 6,9 | - |
| B12 | 15 | 65 | 10 | 25 | 0 | | 1% Phenolsulfonsäure-Formaldehyd-Harz | 1,1 | - |
| B13 | 15 | 65 | 10 | 25 | 0 | 43 | 3% Polydiallyldimethylammoni-umchlorid | 1,7 | - |
| VB14 | 10 | 30 | 60 | 10 | 0 | - | - | 3,4 | - |
| B15 | 10 | 30 | 60 | 10 | 0 | 30 | 1% Phenolsulfonsäure-Formaldehyd-Harz | 3,1 | - |

| | | | | | | | | | |
|---|---|---|---|---|---|---|---|---|---|
| MMA: Methylmethacrylat; MAS: Methacrylsäure; BDA-2: 2-Butandiolacrylat; DMAEMA: Dimethylaminoethylmethacrylat; Monomermengen bezogen auf Gesamtmonomer Die Gesamtmonomermenge in Gew.-% ist bezogen auf die Gesamtmenge aus Kapselkern und Monomer. Die Gesamtmonomermenge ist ein Maß für die Wandstärke. Die Polyelektrolytmenge in Gew.-% ist bezogen auf die Mikrokapseln (Kapselkern + Monomer + Schutzkolloid) | | | | | | | | | |

## Patentansprüche

1. Mikrokapseln umfassend einen Kapselkem, der zu mehr als 95 Gew.-% aus lipophiler Substanz besteht, und eine Kapselwand aus duroplastischem Polymer sowie auf der äußeren Oberfläche der Kapselwand angeordnete Polyelektrolyte mit einem mittleren Molekulargewicht von 500 g/mol bis 10 Millionen g/mol.

2. Mikrokapseln nach Anspruch 1, wobei die Polyelektrolytmenge 0,1 bis 10 Gew.-% bezogen auf das Gesamtgewicht der Mikrokapseln beträgt.

3. Mikrokapseln nach Anspruch 1 oder 2, wobei es sich um einen oder mehrere kationische Polyelektrolyte handelt.

4. Mikrokapseln nach Anspruch 1 oder 3, wobei der Polyelektrolyt ausgewählt ist unter Polyacrylsäuren, Phenolsulfonsäureharzen, Polydiallyldimethylammoniumchloriden, Polyvinylaminen und teilhydrolysierten Polyvinylformamiden und Polyethyleniminen.

5. Mikrokapseln nach einem der Ansprüche 1 bis 4, wobei das duroplastische Polymer ausgewählt ist unter vernetzten Formaldehydharzen, vernetzten Polyharnstoffen, vernetzten Polyurethanen und Methacryl- und Acrylsäureesterpolymeren.

6. Mikrokapseln nach einem der Ansprüche 1 bis 5, wobei die Kapselwand aufgebaut ist aus
| | |
|---|---|
| 10 bis 100 Gew.-% | eines oder mehrerer C₁-C₂₄-Alkylester der Acryl- und/oder Methacrylsäure (Monomere I), |
| 0 bis 80 Gew.-% | eines bi- oder polyfunktionellen Monomers (Monomere II), welches in Wasser nicht löslich oder schwer löslich ist und |
| 0 bis 90 Gew.-% | sonstige Monomere (Monomer III) |
jeweils bezogen auf das Gesamtgewicht der Monomere.

7. Mikrokapseln nach einem der Ansprüche 1 bis 6, wobei die Kapselwand aufgebaut ist aus
| | |
|---|---|
| 30 bis 99 Gew.-% | eines oder mehrerer C₁-C₂₄-Alkylester der Acryl- und/oder Methacrylsäure (Monomere I), |
| 1 bis 70 Ges.-% | eines bi- oder polyfunktionellen Monomers (Monomere II), welches in Wasser nicht löslich oder schwer löslich ist und |
| 0 bis 90 Gew.% | sonstige Monomere (Monomer III). |

8. Mikrokapseln nach einem der Ansprüche 1 bis 7, wobei der Kapselkern eine lipophile Substanz mit einem fest/flüssig Phasenübergang im Temperaturbereich von -20 bis 120 °C ist.

9. Mikrokapseln nach den Ansprüchen 1 bis 8 erhältlich durch Aufbringen eines oder mehrerer Polyelektrolyte auf die Oberfläche von Mikrokapseln umfassend einen Kapselkern und eine Kapselwand aus duroplastischem Polymer.

10. Mikrokapseln nach Anspruch 6 erhältlich durch Aufbringen eines oder mehrerer Polyelektrolyte auf die Oberfläche von Mikrokapseln umfassend einen Kapselkern und eine Kapselwand aufgebaut aus
| | |
|---|---|
| 10 bis 100 Gew.% | eines oder mehrerer C₁-C₂₄-Alkylester der Acryl- und/oder Methacrylsäure (Monomere I), |
| 0 bis 80 Gew.-% | eines bi- oder polyfunktionellen Monomers (Monomere II), welches in Wasser nicht löslich oder schwer löslich ist und |
| 0 bis 90 Gew.-% | sonstige Monomere (Monomer III) |
jeweils bezogen auf das Gesamtgewicht der Monomere.

11. Mikrokapseln nach Anspruch 6 oder 10, erhältlich durch radikalische Polymerisation einer Öl-in-Wasser-Emulsion enthaltend die Monomere, die lipophile Substanz und ein Schutzkolloid und anschließender Behandlung der Mikrokapseln mit einem Polyelektrolyt sowie gegebenenfalls anschließender Sprühtrocknung.

12. Mikrokapseln nach einem der Ansprüche 1 bis 11, **dadurch gekennzeichnet, dass** lipophile Substanz gewählt wird aus aliphatischen Kohlenwasserstoffverbindungen, aromatischen Kohlenwasserstoffverbindungen, gesättigten oder ungesättigten C₆-C₃₀-Fettsäuren, Fettalkoholen, C₆-C₃₀-Fettaminen, C₁-C₁₀-Alkylestern von Fettsäuren, natürlichen und synthetischen Wachsen und halogenierten Kohlenwasserstoffen.

13. Verfahren zur Herstellung von Mikrokapseln gemäß den Ansprüchen 1 bis 12, indem man Mikrokapseln mit einem oder mehreren Polyelektrolyten in einem wässrigen Medium oder Wasser in Kontakt bringt.

14. Verfahren zur Herstellung von Mikrokapseln nach Anspruch 13, indem man eine Öl-in-Wasser-Emulsion, enthaltend die Monomere, die lipophile Substanz und ein Schutzkolloid, radikalisch polymerisiert und der erhaltenen Mikrokapseldispersion einen oder mehrere Polyelektrolyte zusetzt.

15. Verwendung der Mikrokapseln gemäß den Ansprüchen 1 bis 12 zur Modifizierung von Fasern und Textilerzeugnissen.

16. Verwendung der Mikrokapseln gemäß den Ansprüchen 1 bis 12 zur Modifikation von mineralischen Bindebaustoffen.

17. Verwendung der Mikrokapseln gemäß den Ansprüchen 1 bis 12 in Schüttungen.

18. Verwendung der Mikrokapseln gemäß den Ansprüchen 1 bis 12 zur Herstellung von Wärmeträgerflüssigkeiten.

## Claims

1. A microcapsule comprising a capsule core consisting to more than 95% by weight of lipophilic substance and a capsule wall composed of thermoset polymer and also, disposed on the outer surface of the capsule wall, a polyelectrolyte having an average molecular weight in the range from 500 g/mol to 10 million g/mol.

2. The microcapsule according to claim 1 wherein the polyelectrolyte quantity is in the range from 0.1 % to 10% by weight, based on the total weight of the microcapsule.

3. The microcapsule according to claim 1 or 2 wherein the polyelectrolyte comprises one or more cationic polyelectrolytes.

4. The microcapsule according to claim 1 or 3 wherein the polyelectrolyte is selected from polyacrylic acids, phenolsulfonic acid resins, polydiallyldimethylammonium chlorides, polyvinylamines and partially hydrolyzed polyvinylformamides and polyethyleneimines.

5. The microcapsule according to any one of claims 1 to 4 wherein the thermoset polymer is selected from crosslinked formaldehydic resins, crosslinked polyureas, crosslinked polyurethanes and methacrylic and acrylic ester polymers.

6. The microcapsule according to any one of claims 1 to 5 wherein the capsule wall is constructed from
| | |
|---|---|
| 10% to 100% by weight of | one or more C₁-C₂₄-alkyl esters of acrylic and/or methacrylic acid (monomers I), |
| 0% to 80% by weight of | a water-insoluble or sparingly water-soluble bi-or polyfunctional monomer (monomers II), and |
| 0% to 90% by weight of | other monomers (monomer III), |
all based on the total weight of the monomers.

7. The microcapsule according to any one of claims 1 to 6 wherein the capsule wall is constructed from
| | |
|---|---|
| 30% to 99% by weight of | one or more C₁-C₂₄-alkyl esters of acrylic and/or methacrylic acid (monomers I), |
| 1% to 70% by weight of | a water-insoluble or sparingly water-soluble bi- or polyfunctional monomer (monomers II), and |
| 0% to 90% by weight of | other monomers (monomer III). |

8. The microcapsule according to any one of claims 1 to 7 wherein the capsule core is a lipophilic substance having a solid/liquid phase transition in the temperature range from -20 to 120°C.

9. The microcapsule according to claims 1 to 8 obtainable by applying one or more polyelectrolytes onto the surface of a microcapsule comprising a capsule core and a capsule wall constructed of thermoset polymer.

10. The microcapsule according to claim 6 obtainable by applying one or more polyelectrolytes onto the surface of a microcapsule comprising a capsule core and a capsule wall constructed of
| | |
|---|---|
| 10% to 100% by weight of | one or more C₁-C₂₄-alkyl esters of acrylic |
| | and/or methacrylic acid (monomers I), |
| 0% to 80% by weight of | a water-insoluble or sparingly water-soluble bi- |
| | or polyfunctional monomer (monomers II), and |
| 0% to 90% by weight of | other monomers (monomer III), |
all based on the total weight of the monomers.

11. The microcapsule according to claim 6 or 10 obtainable by free radical polymerization of an oil-in-water emulsion comprising the monomers, the lipophilic substance and a protective colloid and subsequent treatment of the microcapsule with a polyelectrolyte and also if appropriate subsequent spray drying.

12. The microcapsule according to any one of claims 1 to 11 wherein lipophilic substance is selected from aliphatic hydrocarbyl compounds, aromatic hydrocarbyl compounds, saturated or unsaturated C₆-C₃₀-fatty acids, fatty alcohols, C₆-C₃₀-fatty amines, C₁-C₁₀-alkyl esters of fatty acids, natural and synthetic waxes and halogenated hydrocarbons.

13. A process for producing a microcapsule according to claims 1 to 12 by contacting a microcapsule with one or more polyelectrolytes in an aqueous medium or water.

14. The process for producing a microcapsule according to claim 13 by free radically polymerizing an oil-in-water emulsion comprising the monomers, the lipophilic substance and a protective colloid and adding one or more polyelectrolytes to the microcapsular dispersion obtained.

15. The use of the microcapsule according to claims 1 to 12 for modifying fibers and textile articles of manufacture.

16. The use of the microcapsule according to claims 1 to 12 for modifying mineral bindered building materials.

17. The use of the microcapsule according to claims 1 to 12 in dumped beds.

18. The use of the microcapsule according to claims 1 to 12 for producing heat transfer fluids.

## Revendications

1. Microcapsules comprenant un noyau de capsule qui consiste à raison de plus de 95 % en poids en substance lipophile, et une paroi de capsule à base de polymère thermodurcissable ainsi que de polyélectrolytes, disposés sur la surface externe de la paroi de la capsule, ayant une masse moléculaire moyenne de 500 g/mole à 10 millions de g/mole.

2. Microcapsules selon la revendication 1, dans lesquelles la quantité de polyélectrolyte va de 0,1 à 10 % en poids, par rapport au poids total des microcapsules.

3. Microcapsules selon la revendication 1 ou 2, dans lesquelles il s'agit d'un ou plusieurs polyélectrolytes cationiques.

4. Microcapsules selon la revendication 1 ou 3, dans lesquelles le polyélectrolyte est choisi parmi des poly(acide acrylique)s, des résines acide phénolsulfonique, des poly(chlorure de diallyldiméthylammonium)s, des polyvinylamines et des polyvinylformamides et polyéthylène-imines partiellement hydrolysés.

5. Microcapsules selon l'une quelconque des revendications 1 à 4, dans lesquelles le polymère thermodurcissable est choisi parmi des résines formaldéhyde réticulées, des polyurées réticulées, des polyuréthannes réticulés et des polymères d'esters d'acide acrylique et d'acide méthacrylique.

6. Microcapsules selon l'une quelconque des revendications 1 à 5, dans lesquelles la paroi de la capsule est constituée de
| | |
|---|---|
| 10 à 100 % en poids | d'un ou plusieurs ester(s) alkylique(s) en C₁-C₂₄ de l'acide acrylique et/ou de l'acide méthacrylique (monomères I), |
| 0 à 80 % en poids | d'un monomère bi- ou poly- fonctionnel (monomère II), qui est insoluble ou difficilement soluble dans l'eau et |
| 0 à 90 % en poids | d'autres monomères (monomère III) |
chaque fois par rapport au poids total des monomères.

7. Microcapsules selon l'une quelconque des revendications 1 à 6, dans lesquelles la paroi de la capsule est constituée de
| | |
|---|---|
| 30 à 99 % en poids | d'un ou plusieurs ester(s) alkylique(s) en C₁-C₂₄ de l'acide acrylique et/ou de l'acide méthacrylique (monomères I), |
| 1 à 70 % en poids | d'un monomère bi- ou poly- fonctionnel (monomère II), qui |
| 0 à 90 % en poids | et insoluble ou difficilement soluble dans l'eau et d'autres monomères (monomère III) |

8. Microcapsules selon l'une quelconque des revendications 1 à 7, dans lesquelles le noyau de la capsule est une substance lipophile ayant un transfert de phase solide/liquide dans la plage de température de -20 à 120 °C.

9. Microcapsules selon les revendications 1 à 8, pouvant être obtenues par application d'un ou plusieurs polyélectrolytes sur la surface de microcapsules comprenant un noyau de capsule et une paroi de capsule à base de polymère thermodurcissable.

10. Microcapsules selon la revendication 6, pouvant être obtenues par application d'un ou plusieurs polyélectrolytes sur la surface de microcapsules comprenant un noyau de capsule et une paroi de capsule constituée de
| | |
|---|---|
| 10 à 100 % en poids | d'un ou plusieurs ester(s) alkylique(s) en C₁-C₂₄ de l'acide acrylique et/ou de l'acide méthacrylique (monomères I), |
| 0 à 80 % en poids | d'un monomère bi- ou poly-fonctionnel (monomère II), qui et insoluble ou difficilement soluble dans l'eau et |
| 0 à 90 % en poids | d'autres monomères (monomère III) |
chaque fois par rapport au poids total des monomères.

11. Microcapsules selon la revendication 6 ou 10, pouvant être obtenues par polymérisation radicalaire d'une émulsion huile-dans-eau contenant les monomères, la substance lipophile et un colloïde protecteur et traitement subséquent des microcapsules par un polyélectrolyte ainsi qu'éventuellement séchage subséquent par atomisation.

12. Microcapsules selon l'une quelconque des revendications 1 à 11, **caractérisées en ce que** la substance lipophile est choisie parmi des composés hydrocarbonés aliphatiques, des composés hydrocarbonés aromatiques, des acides gras en C₆-C₃₀ saturés ou insaturés, des alcools gras, des amines grasses en C₆-C₃₀, des esters alkyliques en C₁-C₁₀ d'acides gras, des cires naturelles ou synthétiques et des hydrocarbures halogénés.

13. Procédé pour la préparation de microcapsules selon les revendications 1 à 12, dans lequel on met les microcapsules en contact avec un ou plusieurs polyélectrolytes dans un milieu aqueux ou de l'eau.

14. Procédé pour la préparation de microcapsules selon la revendication 13, par polymérisation radicalaire d'une émulsion huile-dans-eau, contenant les monomères, la substance lipophile et un colloïde protecteur, et addition d'un ou plusieurs polyélectrolytes à la dispersion de microcapsules obtenue.

15. Utilisation des microcapsules selon les revendications 1 à 12, pour la modification de fibres et de produits textiles.

16. Utilisation des microcapsules selon les revendications 1 à 12, pour la modification de matériaux de construction minéraux liants.

17. Utilisation des microcapsules selon les revendications 1 à 12 dans des remblais.

18. Utilisation des microcapsules selon les revendications 1 à 12, pour la production de fluides caloporteurs.
